# EUROPEAN PATENT SPECIFICATION

(11) **EP 0 733 833 B1**
(45) Date of publication and mention of the grant of the patent: **19.05.1999**
(21) Application number: 95309183.2
(22) Date of filing: 18.12.1995
(51) Int. Cl.: F16H 57/00, F16J 15/12, B29C 44/04

(54) **Separate plate for a control valve used in an automatic transmission and method for fabricating same**
Separate Platte für ein Steuerventil in einem automatischen Getriebe und Verfahren zu ihrer Herstellung
Plaque séparée pour une soupape de commande utilisée dans une transmission automatique et procédé de sa fabrication

(30) Priority: 23.03.1995 JP 88595/95
(43) Date of publication of application: 25.09.1996
(73) Proprietor: NICHIAS CORPORATION, Tokyo (JP)
(72) Inventor: Saito, Hiroshi, Ikoma-gun, Nara-ken (JP)
(74) Representative: Allard, Susan Joyce

(56) References cited:
- EP-A- 0 320 287
- EP-A- 0 592 142
- DE-A- 2 009 950
- DE-B- 1 002 996
- US-A- 4 485 138
- US-A- 5 082 725
- PATENT ABSTRACTS OF JAPAN vol. 013, no. 072 (C-570), 17 February 1989 & JP-A-63 264691 (NICHIAS CORP), 1 November 1988,
- PATENT ABSTRACTS OF JAPAN vol. 010, no. 295 (M-523), 7 October 1986 & JP-A-61 109969 (UCHIYAMA MFG CORP), 28 May 1986,
- PATENT ABSTRACTS OF JAPAN vol. 018, no. 533 (C-1259), 11 October 1994 & JP-A-06 184522 (NOK CORP), 5 July 1994,

## Description

The present invention relates to a separate plate having a sealing function for a control valve for use in an automatic transmission, a method for fabricating a separate plate, the use of a plate as a separate plate, and a control valve comprising a separate plate.

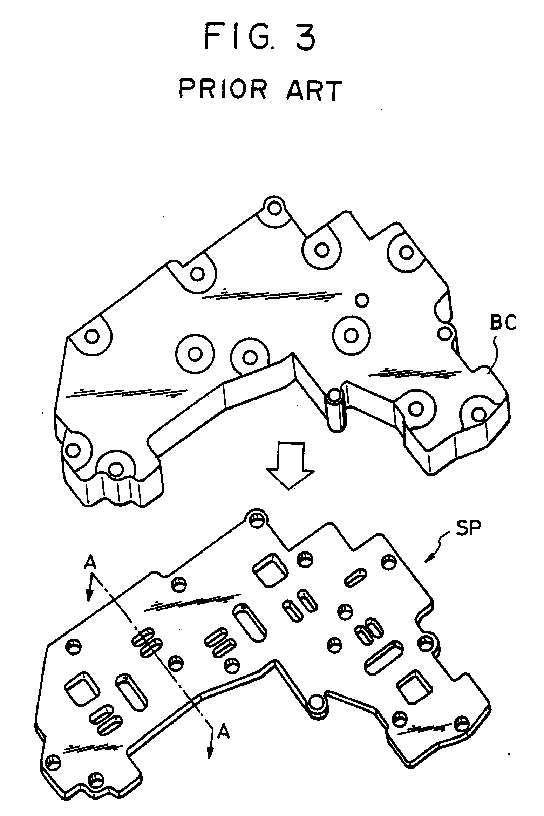

A valve body of a control valve disposed, for example, in an automatic transmission of an automobile or the like, is divided into a plurality of parts, such as upper and down halves, etc., as indicated in Fig. 3, and is composed of a branching container BC, within which oil paths are formed, and a separate plate SP. Heretofore, in order to seal the oil paths in the branching container BC, a construction has generally been adopted wherein the joining surfaces of the branching container BC and sealing surfaces of the flange portions thereof, etc., are subjected to a lapping process and a separate plate SP made of metal or resin is inserted therebetween. In order to improve further the sealing property, a gasket (not indicated in the figure) made of paper having the same form as the separate plate SP may be inserted between the separate plate and the branching container BC, etc.

The gasket made of paper has the following advantages: 1) it is not expensive; 2) it is not fluffy after having been formed into a gasket and has a good superficial smoothness; and 3) since it has a good flatness and a great amount of compression, it readily adapts to roughness and undulations in the sealing parts, etc. There are, however, a number of disadvantages of the gasket: i) since it has a great stress relaxation, the axial force of the bolts decreases and the sealing property becomes unstable; ii) tensile strength in the flat surface direction is low and the gasket is easily destroyed; iii) because of contraction of paper due to the influences of humidity, the form of the gasket is not stable and the sealing property becomes unstable and it therefore becomes difficult to mount it on a predetermined position, etc.; and iv) it has such problems on the working process that in order to assure sufficient sealing, it is necessary to subject the sealing surfaces of the branching container to a high-grade surface finish, such as lapping or the like and, as the result, the fabrication process becomes complicated and manufacturing costs increase.

Therefore, in lieu of the gasket made of paper a separate plate having a sealing function in itself has been proposed. For example, in Japanese Utility Model Publication No. 61-123262 there is disclosed a separate plate in which surface sealing portions are formed by coating the two surfaces of a metal base plate with rubber. Soft or hard rubber is used as the rubber coating and the amount of compression of the rubber layers is therefore small. Accordingly, the rubber layers cannot readily adapt to undulations in the sealing surfaces of a flange of low rigidity and thus the sealing property becomes unstable. Further, when forming the oil paths, burrs are produced on punching, which reduces the sealing property.

JP-A-63/264,691 discloses a gasket having foam-free rubber layers on both sides of a metallic substrate sheet and from rubber layers on the surfaces thereof.

The present invention has been made in view of the problems and the object thereof is to provide a separate plate for a control valve used in an automatic transmission having a good sealing property which is independent of smoothness or rigidity of sealing surfaces.

Accordingly, the present invention provides a separate plate for a control valve for use in an automatic transmission comprising:
a metal plate; and
a sealing portion including a foam synthetic rubber layer formed on at least one surface of the metal plate, wherein the foam synthetic rubber layer has a thickness of from 80 µm to 500 µm, is made of at least one of hydrogenated acrylonitrile butadiene rubber, acrylonitrile butadiene rubber, acrylic rubber or fluoric rubber, and is reinforced with inorganic fiber, organic fiber or an unwoven or woven cloth.

The present invention also provides a method for fabricating a separate plate for a control valve for use in an automatic transmission, comprising the steps of:
subjecting a metal plate to a predetermined pretreatment and applying rubber raw material blended with inorganic or organic fiber thereto in a predetermined thickness; and
foaming the rubber raw material by a thermal treatment so as to form a foam rubber layer having a thickness of from 80 µm to 500 µm.

The present invention additionally provides the use of a plate as defined above as a use of a plate as defined above as a separate plate for a control valve for use in an automatic transmission.

The present invention further provides a control valve comprising a separate plate as defined above.

The separate plate may have one or two sealing portions, each of which comprises a foam rubber layer 80 µm to 500 µm thick, disposed on one or two surfaces of the metal plate.

Further is it preferable that, in the separate plate for a control valve in an automatic transmission (hereinbelow called simply separate plate),
(1) the foam rubber forming the one or two sealing portions is made of at least one synthetic foam rubber selected from hydrogenated acrylonitrile butadiene rubber, acrylonitrile butadiene rubber, acrylic rubber and fluoric rubber; and
(2) each of the one or two sealing portions has a two-layered structure, in which a not yet foamed rubber layer, preferably having a thickness of from 90 µm to 300µm, and whose rubber hardness defined by JIS SHORE A is preferably from 40 to 95, is formed between the metal plate and the foam rubber layer.

The following functions and effects can be obtained by constructing the separate plate according to the present invention as described above. That is, 1) since the one or two sealing portions are made of foam rubber, the amount of compression is great, they follow easily undulation or roughness of the inner surface of the branching container, and even if burrs are produced, they can be absorbed in the interior of the seal portions, thus stabilizing the sealing property;
3) since the one or two sealing portions are made of fiber reinforced foam rubber layer, transversal bulging-out flow of the foam rubber is not produced after clamping of bolts and stress relaxation generated by the flow is reduced; and
3) since each of the one or two sealing portions is made up of two layers, of a not yet foamed rubber layer and a foam rubber layer, the sealing property is improved, because the foam rubber layer fits with the inner surface of the branching container and the amount of compression can be adjusted by regulating the thickness of the foam rubber layer and the not yet foamed rubber layer. At this time, if the thickness of the foam rubber layer is kept small, the transversal bulging-out flow of the foam rubber is kept small and stress relaxation due to the flow is decreased.

Fig. 1 is a cross-sectional view of the principal part indicating an embodiment of the separate plate for a control valve used in an automatic transmission according to the present invention;
Fig. 2 is a cross-sectional view of the principal part indicating another embodiment of the separate plate for a control valve used in an automatic transmission according to the present invention; and
Fig. 3 is a perspective view indicating how to mount a separate plate and a branching container for a control valve used in an automatic transmission.

Hereinbelow the present invention will be explained in detail, referring to the drawings.

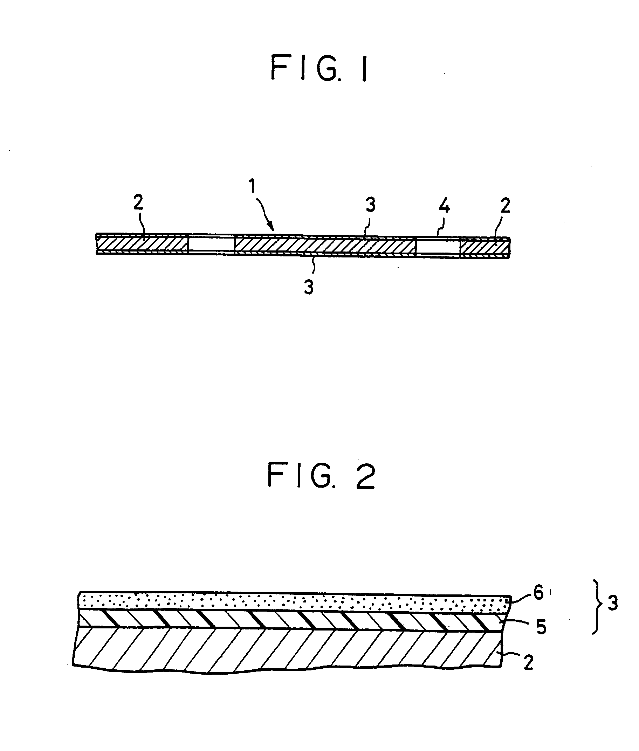

Fig. 1 is a cross-sectional view of the principal part indicating an embodiment of the separate plate according to the present invention, which is a cross-sectional view corresponding e.g. to the cross-section along the line indicated by AA in Fig. 3. As indicated in the figure, the separate plate 1 is constructed by forming one or two sealing portions 3 on one or two surfaces of a metal plate 2 (two surfaces in the embodiment indicated in the figure) and by forming through holes 4 corresponding to oil paths in the branching container, for example by punching.

Each of the sealing portions 3 consists of a foam rubber layer having a thickness of from 80µm to 500µm. This foam rubber layer is formed by applying rubber raw material in a predetermined thickness on the metal plate 2, which has been subjected to a pretreatment such as mechanical treatment, anodizing or primer treatment, e.g. by a usual method, and by foaming the rubber raw material by heat treatment. It is further possible to vulcanize the material at the same time as foaming if needed.

In this case, the thickness of the foam rubber layer is less than 80µm, the amount of compression is insufficient and it is not possible to obtain the effects of following undulation and roughness of the inner surface of the branching container and absorbing burrs. Further foaming of rubber is generally performed by thermal decomposition and this method gives rise to a physical problem that it is difficult to form a layer thinner than 80µm. On the other hand, if the thickness of the foam rubber layer is greater than 500µm, the transversal bulging-out flow of the foam rubber after clamping of bolts to the branching container increases and stress relaxation decreases to a degree of that obtained by a paper gasket, which is not preferable.

For the foam rubber layer, in addition to the thickness, the density is also an important factor. This density is defined by the foam magnification factor. The greater the foam magnification factor, the greater the amount of compression of the foam rubber, which is more advantageous for the sealing property. According to the present invention it is preferable that the density of the foam rubber layer is from 0.08 to 0.1.

The thickness and the density of the foam rubber layer can be controlled, for example, by the application amount of rubber, the foaming time and the foaming temperature.

Either natural rubber or synthetic rubber can be used for forming the foam rubber layer. For example, chloroprene rubber, hydrogenated acrylonitrile butadiene rubber (HNBR), acrylonitrile butadiene rubber (NBR), acrylic rubber or fluoric rubber can be cited therefor. Particularly HNBR, NBR, acrylic rubber and fluoric rubber are preferable and they can be used singly or in combination.

Further stress relaxation is reduced by reinforcing the foam rubber layer with inorganic fiber, organic fiber or an unwoven or woven cloth. The kinds of fibers constituting the inorganic fiber, the organic fiber and the unwoven or woven cloth are not specifically restricted. For example aramid fiber, polyester fiber or nylon fiber can be used. Since the valve body can be exposed to a high temperature, it is preferable that the fiber and the unwoven or woven cloth are heat resistant.

This fiber reinforced foam rubber layer is preferably constructed by effecting foaming processing by blending whiskers of inorganic fiber or organic fiber with the rubber raw material so that the whiskers are dispersed uniformly in matrix of the foam rubber. It can also have a sandwich construction, in which inorganic or organic fiber woven in a cloth or as an unwoven cloth is put between two foam rubber layers. The thickness of the cloth is preferably about 10µm.

Each of the one or two sealing portions 3 can be a single foam rubber layer. Apart therefrom, as indicated in Fig. 2, it may have a two-layered structure, in which a not yet foamed rubber layer 5 having a thickness of from 90µm to 300µm, for example whose rubber hardness defined by JIS SHORE A is from 40 to 95, and a foam rubber layer 6 having a thickness of from 80µm to 200µm are superposed on the metal plate 2.

In this case, if the hardness of the not yet foamed rubber layer 5 is less than 40, it is too soft and stress relaxation is great. On the contrary, if it is greater than 95, a satisfactory amount of compression cannot be obtained. Further, when the thickness is less than 90µm, in addition to the fact that a suitable amount of compression cannot be obtained, when it is combined with a foam rubber layer, so-called buckling takes place. On the contrary, even if the thickness is greater than 300 µm, no increase in the effect owing thereto is observed; it only increases expense.

On the other hand, if the thickness of the foam rubber layer 6 is less than 80µm, a satisfactory amount of compression cannot be obtained and if it is greater than 200µm, flow of the foam rubber takes place, which is not preferable.

The present invention will now be described using some embodiments.

### (EMBODIMENTS 1 to 4)

Specimens were prepared on a cold pressed steel plate, in which the sealing portion was a fiber reinforced foam rubber layer; where fiber was mixed in the foam rubber layer or an unwoven cloth was used, as indicated in TABLE 1, and sealing property, stress relaxation and ratio of compression were measured with the results given in TABLE 1.

In the seal test to determining the seal pressure the specimen was mounted with a clamping pressure per unit area of 50 kgf/cm² and a sealing width of 3mm on a flange 15mm thick having an average roughness (R_{Z}) of 10µm at ten points on the surface according to JIS B 0601 and a maximum height (Rmax) of 15µm. Leakage was observed while supplying air as a test fluid.

Stress relaxation was measured according to ASTM F-38 Method B and the ratio of compression was also measured. The ratio of compression is the value obtained by calculation for the sealing portion at a pressure per unit area of 100 kgf/cm².

**TABLE 1**

| | EMBODIMENT 1 | EMBODIMENT 2 | EMBODIMENT 3 | EMBODIMENT 4 |
|---|---|---|---|---|
| THICKNESS OF FOAM RUBBER LAYER (µm) | 300 | 300 | 300 | 500 |
| KIND OF FOAM RUBBER LAYER | HNBR | HNBR | HNBR | HNBR |
| THICKNESS OF METAL LAYER (mm) | 1.2 | 1.2 | 1.4 | 1.4 |
| KIND OR FIBER | ARAMID | POLYESTER | --- | --- |
| KIND OF UNWOVEN CLOTH | --- | --- | POLYESTER | NYLON |
| THICKNESS OF UNWOVEN CLOTH (µm) | --- | --- | 10 | 10 |
| OVERALL THICKNESS (mm) | 1.8 | 1.8 | 2.0 | 2.4 |
| STRESS RELAXATION | 6 | 6 | 4 | 4 |
| SEALING PRESSURE (kgf/cm²) | OVER 5 | OVER 5 | OVER 6 | OVER 5 |
| RATIO OF COMPRESSION (%) | 50 | 50 | 50 | 50 |

From TABLE 1 it can be confirmed that the separate plate according to the present invention has excellent sealing property, stress relaxation and ratio of compression, when the thickness of the fiber reinforced foam rubber layer is in a region defined by the present invention.

## Claims

1. A separate plate (1) for a control valve for use in an automatic transmission comprising:
a metal plate (2); and
a sealing portion (3) including a foam synthetic rubber layer formed on at least one surface of the metal plate, wherein the foam synthetic rubber layer has a thickness of from 80 µm to 500 µm, is made of at least one of hydrogenated acrylonitrile butadiene rubber, acrylonitrile butadiene rubber, acrylic rubber or fluoric rubber, and is reinforced with inorganic fiber, organic fiber or an unwoven or woven cloth.

2. A separate plate (1) as claimed in claim 1 further comprising a not-yet-foamed rubber layer (5) formed between the metal plate and the foam rubber layer (6).

3. A separate plate (1) as claimed in claim 2 wherein the not-yet-foamed rubber layer (5) has a thickness of from 90µm to 300µm and the foam rubber layer (6) has a thickness of from 80µm to 200µm.

4. A separate plate (1) as claimed in any one of the preceding claims wherein the density of the foam rubber layer is from 0.08 to 0.1.

5. A separate plate (1) as claimed in any one of the preceding claims wherein the foam rubber layer (3) is constructed by putting inorganic or organic fiber woven in cloth or an unwoven cloth between two foam rubber layers.

6. A separate plate as claimed in any one of claims 1 to 4 wherein the foam rubber layer (3) is formed by dispersing whiskers of the inorganic or organic fiber substantially uniformly in the foam rubber layer.

7. A method for fabricating a separate plate (1) for a control valve for use in an automatic transmission, comprising the steps of:
subjecting a metal plate (2) to a predetermined pretreatment and applying rubber raw material blended with inorganic or organic fiber thereto in a predetermined thickness; and
foaming the rubber raw material by a thermal treatment so as to form a foam rubber layer (3) having a thickness of from 80 µm to 500 µm.

8. A method as claimed in claim 7 wherein the rubber raw material is made of at least one of hydrogenated acrylonitrile butadiene rubber, acrylonitrile butadiene rubber, acrylic rubber or fluoric rubber.

9. Use of a plate as claimed in any one of claims 1 to 6 as a separate plate (1) for a control valve for use in an automatic transmission.

10. A control valve comprising a separate plate (1) as claimed in any one of claims 1 to 6.

## Patentansprüche

1. Gesonderte Platte (1) für ein Steuer/Regelventil zur Verwendung in einem automatischen Getriebe, umfassend:
eine Metallplatte (2); und
einen Dichtungsabschnitt (3) umfassend eine synthetische Schaumgummischicht, die auf wenigstens einer Oberfläche der Metallplatte gebildet ist, wobei die synthetische Schaumgummischicht eine Dicke von 80 µm bis 500 µm aufweist, aus wenigstens einem von hydriertem Acrylnitril-Butadien-Kautschuk, Acrylnitril-Butadien-Kautschuk, Acrylkautschuk oder Fluorkautschuk hergestellt ist und mit anorganischer Faser, organischer Faser oder einem nichtgewebten oder gewebten Textilerzeugnis verstärkt ist.

2. Gesonderte Platte (1) nach Anspruch 1, ferner umfassend eine noch nicht geschäumte Gummischicht (5), die zwischen der Metallplatte und der Schaumgummischicht (6) gebildet ist.

3. Gesonderte Platte (1) nach Anspruch 2, bei der die noch nicht geschäumte Gummischicht (5) eine Dicke von 90 µm bis 300 µm aufweist und die Schaumgummischicht (6) eine Dicke von 80 µm bis 200 µm aufweist.

4. Gesonderte Platte (1) nach einem der vorangehenden Ansprüche, bei der die Dichte der Schaumgummischicht 0,08 bis 0,1 beträgt.

5. Gesonderte Platte (1) nach einem der vorangehenden Ansprüche, bei der die Schaumgummischicht (3) ausgeführt ist durch Anordnen von anorganischer oder organischer Faser - in ein Textilerzeugnis eingewebt oder ein ungewebtes Textilerzeugnis - zwischen zwei Schaumgummischichten.

6. Gesonderte Platte nach einem der Ansprüche 1 bis 4, bei der die Schaumgummischicht (3) gebildet ist durch Verteilen von Whiskern der anorganischen oder organischen Faser im wesentlichen gleichmäßig in der Schaumgummischicht.

7. Verfahren zum Herstellen einer gesonderten Platte (1) für ein Steuer/Regelventil zur Verwendung in einem automatischen Getriebe, umfassend die Schritte:
Aussetzen einer Metallplatte (2) einer vorbestimmten Vorbehandlung und Anbringen von mit anorganischer oder organischer Faser gemischtem Gummi-Rohmaterial daran in einer vorbestimmten Dicke; und
Schäumen des Gummi-Rohmaterials durch eine thermische Behandlung, so daß eine Schaumgummischicht (3) mit einer Dicke von 80 µm bis 500 µm gebildet wird.

8. Verfahren nach Anspruch 7, bei dem das Gummi-Rohmaterial hergestellt ist von wenigstens einem von hydriertem Acrylnitril-Butadien-Kautschuk, Acrylnitril-Butadien-Kautschuk, Acrylkautschuk oder Fluorkautschuk.

9. Verwendung einer Platte wie in einem der Ansprüche 1 bis 6 beansprucht als eine gesonderte Platte (1) für ein Steuer/Regelventil zur Verwendung in einem automatischen Getriebe.

10. Steuer/Regelventil umfassend eine gesonderte Platte (1), wie in einem der Ansprüche 1 bis 6 beansprucht.

## Revendications

1. Plaque séparée (1) pour une valve de commande destinée à une utilisation dans une transmission automatique, comprenant:
une plaque métallique (2); et
une partie de joint d'étanchéité (3) incluant une couche de caoutchouc-mousse synthétique formée sur au moins une surface de la plaque métallique, où la couche de caoutchouc-mousse synthétique présente une épaisseur de 80 µm à 500 µm, est faite de l'une au moins des matières caoutchouc acrylonitrile-butadiène hydrogéné, caoutchouc acrylonitrile-butadiène, caoutchouc acrylique ou caoutchouc fluoré, et est armée de fibres inorganiques, de fibres organiques ou d'un tissu non tissé ou tissé.

2. Plaque séparée (1) selon la revendication 1, comprenant en outre une couche (5) de caoutchouc non encore expansé, formée entre la plaque métallique et la couche (6) de caoutchouc-mousse.

3. Plaque séparée (1) selon la revendication 2, où la couche (5) de caoutchouc non encore expansé présente une épaisseur de 90 µm à 300 µm, et la couche (6) de caoutchouc-mousse présente une épaisseur de 80 µm à 200 µm.

4. Plaque séparée (1) selon l'une quelconque des revendications précédentes, où la densité de la couche de caoutchouc-mousse est de 0,08 à 0,1.

5. Plaque séparée (1) selon l'une quelconque des revendications précédentes, où la couche (3) de caoutchouc-mousse est construite en insérant des fibres inorganiques ou organiques tissées en un tissu ou non-tissées entre deux couches de caoutchouc-mousse.

6. Plaque séparée (1) selon l'une quelconque des revendications 1 à 4, où la couche (3) de caoutchouc-mousse est formée en dispersant des brins de fibres inorganiques ou organiques de façon sensiblement uniforme dans la couche de caoutchouc-mousse.

7. Procédé de fabrication d'une plaque séparée (1) pour une valve de commande destinée à être utilisée dans une transmission automatique, comprenant les étapes suivantes:
soumettre une plaque métallique (2) à un traitement préparatoire prédéterminé et appliquer de la matière caoutchouteuse brute mélangée à des fibres inorganiques ou organiques en une épaisseur prédéterminée; et
faire mousser la matière caoutchouteuse brute grâce à un traitement thermique, de manière à former une couche (3) de caoutchouc-mousse présentant une épaisseur de 80 µm à 500 µm.

8. Procédé selon la revendication 7, où la matière caoutchouteuse brute est faite de l'une au moins des matières caoutchouc acrylonitrile-butadiène hydrogéné, caoutchouc acrylonitrile-butadiène, caoutchouc acrylique ou caoutchouc fluoré.

9. Utilisation d'une plaque selon l'une quelconque des revendications 1 à 6 en tant que plaque séparée (1) pour une valve de commande destinée à être utilisée dans une transmission automatique.

10. Valve de commande comprenant une plaque séparée (1) selon l'une quelconque des revendications 1 à 6.
